(19) Europäisches Patentamt
European Patent Office
Office européen des brevets

(11) **EP 4 211 520 B1**

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **22809854.7**

(22) Anmeldetag: **01.11.2022**

(51) Internationale Patentklassifikation (IPC):
**G05B 19/43** (2006.01)   **G05B 11/42** (2006.01)

(52) Gemeinsame Patentklassifikation (CPC):
**G05B 19/43; G05B 11/42; G05B 2219/37604; G05B 2219/42282**

(86) Internationale Anmeldenummer:
**PCT/EP2022/080445**

(87) Internationale Veröffentlichungsnummer:
**WO 2023/073241 (04.05.2023 Gazette 2023/18)**

(54) **VERFAHREN UND VORRICHTUNGEN ZUM REGELN EINER REGELSTRECKE MIT FLUIDISCHEM ANTRIEB**

METHODS AND DEVICES FOR CONTROLLING A CONTROLLED SYSTEM WITH FLUIDIC DRIVE

PROCÉDÉS ET DISPOSITIFS DE COMMANDE D'UN SYSTÈME COMMANDÉ À ENTRAÎNEMENT FLUIDIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.11.2021 DE 102021128424**

(43) Veröffentlichungstag der Anmeldung:
**19.07.2023 Patentblatt 2023/29**

(73) Patentinhaber: **Samson Aktiengesellschaft**
**60314 Frankfurt am Main (DE)**

(72) Erfinder: **FIEBIGER, Andreas**
**65232 Taunusstein (DE)**

(74) Vertreter: **Köllner, Malte**
**Köllner.ip Patentanwaltskanzlei**
**Vogelweidstraße 8**
**60596 Frankfurt am Main (DE)**

(56) Entgegenhaltungen:
**WO-A1-2011/083034     DE-A1- 3 731 983**
**US-A1- 2010 066 296**

**Beschreibung**

Gebiet der Erfindung

Die Erfindung betrifft Verfahren und Vorrichtungen zum Regeln einer Regelstrecke mit einem fluidischen Antrieb. Regelstrecken mit fluidischem Antrieb sind bspw. in Stellventilen zum Verändern einer Prozessfluidströmung in prozesstechnischen Anlagen zu finden. Die Veränderung der Prozessfluidströmung wird dabei in vielen Fällen mithilfe eines Ventilglieds wie z.B. eines beweglichen Ventilkegels oder einer beweglichen Drosselklappe bewirkt.

Ventilglieder von Stellventilen zum Verändern einer Prozessfluidströmung in prozesstechnischen Anlagen werden bevorzugt mit fluidischen Antrieben bewegt. Fluidische Antriebe zeichnen sich dadurch aus, dass sie im Niederstrom- bzw. Niederspannungsbereich betrieben werden können, was insbesondere für Anwendungen in prozesstechnischen Anlagen wünschenswert und oftmals sogar unumgänglich ist.

Die Regelung eines fluidischen Antriebs erfolgt häufig über einen sog. Stellungsregler. Der Stellungsregler empfängt hierzu von einer Leitwarte einen Soll-Wert für eine Regelgröße (Führungsgröße) wie z.B. die Position eines Ventilglieds. Der Soll-Wert kann bspw. in Form eines Stromsignals im Bereich von 4 - 20 mA oder eines Spannungssignals im Bereich von 0 - 5 V, 0 - 12 V oder 0 - 24 V an den Stellungsregler übertragen werden.

Der Soll-Wert der Regelgröße kann anschließend mithilfe eines Strom-Druck-Wandlers (IP-Wandler) in ein fluidisches Signal umgewandelt werden. Da die elektrische Versorgungsleistung in der Prozesstechnik häufig stark begrenzt ist, wird das fluidische Signal häufig nochmals mittels eines nachgeschalteten Luftleistungsverstärkers (allgemein: Druck-Druck-Wandler, PP-Wandler) verstärkt. Das solcherart verstärkte fluidische Signal wird schließlich zum Betrieb des fluidischen Antriebs genutzt.

Der fluidische Antrieb kann mit einer Antriebsstange verbunden sein, und diese wiederum mit dem Ventilglied des Stellventils. Auf diese Weise kann der fluidische Antrieb mithilfe der Antriebsstange das Ventilglied bewegen.

Zum Regeln der Position des Ventilglieds kann das Stellventil ein Positionsmesssystem aufweisen. Das Positionsmesssystem erfasst die Position des Ventilglieds und meldet diese an den Stellungsregler zurück. Im Stellungsregler werden in Abhängigkeit von dem von der Leitwarte vorgegebenen Soll-Wert und dem von dem Positionsmesssystem gemeldeten Ist-Wert der Regelgröße ein Wert einer Stellgröße erzeugt. Der Wert der Stellgröße ist in diesem Fall das Stromsignal, das von dem Strom-Druck-Wandler in das fluidische Signal umgewandelt wird, welches mit dem Luftleistungsverstärker verstärkt und zum Betrieb des fluidischen Antriebs genutzt wird. Im Rahmen des von dem Stellungsregler ausgeführten Regelverfahrens reagiert der Wert der Stellgröße bzw. das Stromsignal fortlaufend auf den Ist-Wert der Regelgröße, d.h. auf die Position des Ventilglieds, die von dem Positionsmesssystem erfasst wird.

Neben der Position eines Ventilglieds können auch Drücke oder Durchflussmengen vorgegeben und geregelt werden, mit entsprechenden Druck- oder Durchflusssensoren zur Bestimmung der zugehörigen Ist-Werte.

Die Güte der Regelung durch den Stellungsregler kann anhand der Geschwindigkeit, mit der die Regelstrecke den vorgegebenen Soll-Wert erreicht, und/oder der Amplitude der zwischenzeitlich erreichten Regelabweichungen bewertet werden. Die Regelgüte ist in vielen Fällen stark von der Leistung des Antriebs und der Leistungsaufnahme der damit angetriebenen Komponenten abhängig. Der Antrieb sollte weder zu schwach noch zu stark sein. Jedoch ist eine Anpassung des Antriebs an die Leistungsaufnahme der Komponenten einer Regelstrecke oft nicht möglich oder praktikabel.

Die Wahl fällt deshalb oft auf einen Antrieb, der zu leistungsstark bzw. zu schnell ist. Schließlich lassen sich mit einem leistungsstarken Antrieb ggf. kurze Regelzeiten und damit auch eine hohe Regelgüte erzielen.

Regelstrecken mit zu leistungsstarken Antrieben neigen jedoch zu langlebigen Regelschwingungen und großen Regelabweichungen, d.h. zu langlebigen und amplitudenstarken Schwingungen um den Soll-Wert der Regelgröße. Derartige Über- bzw. Dauerschwinger haben nicht nur einen negativen Einfluss auf die Regelgüte eines Regelkreises. Sie stellen auch eine Gefahr bei dessen Betrieb dar und können sogar zu schweren Schäden führen.

Um ein derartiges über- bzw. dauerschwingendes Verhalten zu vermeiden, werden in vielen Regeleinheiten bzw. Stellungsreglern Ratenbegrenzer eingesetzt. Ratenbegrenzer begrenzen den Betrag der Rate, mit der der Wert der Stellgröße verändert wird, auf ein Maximum (d.h. ein Ratenbegrenzer stellt sicher, dass der Absolutbetrag des Zahlenwerts, mit dem die Rate in einer vorgegebenen Maßeinheit wie bspw. %/s oder m/s angegeben wird, kleiner als oder gleich einem vorgegebenen Maximum ist). Der Einsatz eines Ratenbegrenzers kann als Geschwindigkeitsbegrenzung für den zu schnellen Antrieb der Regelstrecke aufgefasst werden, die verhindert, dass der Antrieb bzw. die Regelstrecke über das Ziel hinausschießt.

Über- bzw. Dauerschwinger können jedoch auch durch Verzögerungen bzw. Hysterese der einzelnen Funktionseinheiten eines Systems entstehen, d.h. die Regelgüte eines Regelkreises hängt u.a. auch davon ab wie schnell die einzelnen Funktionseinheiten auf Änderungen ihrer Betriebsparameter reagieren. Dazu gehört nicht nur die Hysterese magnetischer Komponenten bspw. eines Strom-Druck-Wandlers oder Magnetventils, sondern auch Reibungseffekte bspw. der Dicht- und Führungsstellen einer Antriebsstange oder eines Ventilglieds, Verzögerungen durch zwischengeschaltete Verstärker wie z.B. einen Luftleistungsverstärker sowie die Massenträgheit der beweglichen Komponenten. In diesen Fällen kann ein Ratenbegrenzer ein über- bzw. dauerschwingendes Verhalten oft nicht verhindern. Schließlich wird der Wert der Stellgröße auch beim Einsatz eines Ratenbegrenzers solange verändert, bis das System reagiert. Die Reaktion des Systems kann jedoch zu spät erfolgen, so dass der Antrieb bzw. die Regelstrecke in vielen Fällen wieder über das Ziel hinausschießt.

Stand der Technik

Im Stand der Technik finden sich weitere Verfahren und Vorrichtungen zur Verbesserung der Regelgüte eines Regelkreises, der Verzögerungen bzw. Hysterese aufweist. In der WO 2008/064740 A1 wird bspw. ein Verfahren zur Verbesserung der Regelgüte eines Regelkreises mit einem PID-Regler beschrieben. Dabei werden der I-Verstärkungsfaktor des PID-Reglers an eine Antriebsgeschwindigkeit und der D-Verstärkungsfaktor an einen Antriebsstrom und eine Antriebslast angepasst. Verzögerungs- und/oder Hysterese-Effekte werden jedoch nicht erkannt, so dass weiterhin Über- bzw. Dauerschwinger auftreten und zu gefährlichen Betriebssituationen führen können.

Die WO 2015/153105 A1 offenbart ein Diagnoseverfahren zur Bestimmung von Reibungseffekten, insbesondere von Stick-Slip Effekten. Das Verfahren sieht zudem Maßnahmen zur Beseitigung dieser Effekte vor, wie z.B. ein Einstellen einer Ventilpackung, Auftragen eines Packungsschmiermittels auf eine Ventilpackung, Auswechseln der Ventilpackung, Auswechseln der Ventilstange eines Steuerventils und/oder Einstellen des Steueralgorithmus in der Ventilsteuerung oder einer Prozesssteuerung. In vielen Fällen spielen Reibungsoder Stick-Slip-Effekte jedoch eine untergeordnete Rolle. Zudem reagiert das Verfahren lediglich auf bereits erkannte Reibungs-/Stick-Slip-Effekte. Plötzlich oder unerwartet auftretende Verzögerungen oder Hysterese-Effekte werden nicht abgefangen.

Aufgabe

Aufgabe der Erfindung ist es, Vorrichtungen und Verfahren zur Verbesserung der Regelgüte von Regelkreisen mit fluidischen Antrieben bereitzustellen, in denen Verzögerungen und/oder Hysterese zu langlebigen Regelschwingungen und großen Regelabweichungen führen können, insbesondere wenn die Verzögerungen und/oder Hysterese plötzlich oder unerwartet auftreten.

Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Regeln einer Regelstrecke mit einem fluidischen Antrieb vorgeschlagen, wobei der fluidische Antrieb der Regelstrecke zum Steuern einer Regelgröße geeignet ist und die Regelstrecke zum Steuern der Regelgröße mit einer Stellgröße beaufschlagt wird. Das Verfahren umfasst folgende Schritte:

1. Vorgeben eines Soll-Werts für die Regelgröße;
2. Bestimmen eines Ist-Werts und einer Veränderungsrate des Ist-Werts der Regelgröße;
3. Bestimmen einer gewünschten Veränderung eines Werts der Stellgröße anhand des vorgegebenen Soll-Werts der Regelgröße und des bestimmten Ist-Werts der Regelgröße;
4. Leiten der gewünschten Veränderung des Werts der Stellgröße an einen Ratenbegrenzer, wobei der Ratenbegrenzer aus der gewünschten Veränderung des Werts der Stellgröße einen neuen Wert der Stellgröße zum Beaufschlagen des fluidischen Antriebs erzeugt, eine Veränderung des Werts der Stellgröße aber nur mit einer Veränderungsrate zulässt, deren Betrag kleiner als oder gleich einem vorgegebenen Wert ist. Dabei wird der vorgegebene Wert auf einen ersten Wert festgelegt, wenn die Veränderungsrate des Ist-Werts der Regelgröße innerhalb vorgegebener Grenzen liegt, und auf einen zweiten Wert, wenn die Veränderungsrate des Ist-Werts der Regelgröße außerhalb der vorgegebenen Grenzen liegt. Der zweite Wert ist dabei kleiner als der erste Wert.

Typische Werte hierfür sind, dass der zweite Wert um mindestens einen Faktor 2 kleiner ist als der erste Wert, vorzugsweise um einen Faktor 5, wiederum vorzugsweise um einen Faktor 8. Möglich ist auch, dass der zweite Wert um einen Faktor 10 oder mehr kleiner ist als der erste Wert.

Solange sich also der Ist-Wert der Regelgröße der Regelstrecke z.B. aufgrund von Verzögerungen der einzelnen Funktionseinheiten der Regelstrecke oder Hysterese nicht oder nur geringfügig ändert, wird die Veränderung des Werts der Stellgröße demnach weniger stark begrenzt als in Situationen, in denen sich der Ist-Wert der Regelgröße derart verändert, dass die Veränderungsrate des Ist-Werts der Regelgröße außerhalb der vorgegebenen Grenzen liegt. Somit können einerseits Zustände, in denen die Regelstrecke aufgrund von Verzögerungen und Hysterese verharrt, schneller überwunden bzw. durchfahren und damit einhergehende Totzeiten reduziert werden. Andererseits können zu starke Veränderungen der Stellgröße und damit einhergehende Über- bzw. Dauerschwingungen der Regelgröße vermieden werden.

Im Rahmen des Verfahrens werden Verzögerungen bzw. Hysterese anhand zeitlicher Veränderungen des Ist-Werts der Regelgröße erkannt. Die Begrenzung der Veränderungsraten des Werts der Stellgröße kann instantan an die erkannten Verzögerungen bzw. Hysterese angepasst werden. Auf diese Weise können auch plötzlich oder unerwartet auftretende Verzögerungen oder Hysterese-Effekte abgefangen werden.

Die Veränderungsrate des Ist-Werts der Regelgröße liegt bspw. innerhalb vorgegebener Grenzen, wenn der Betrag der Veränderungsrate kleiner als oder gleich einem vorgegebenen Grenzwert ist. Dementsprechend würde sie außerhalb der vorgegebenen Grenzen liegen, wenn ihr Betrag größer als ein vorgegebener Grenzwert ist. Dabei ist es jedoch auch jeweils möglich, dass der vorgegebene Grenzwert vom Vorzeichen der Veränderungsrate abhängt, d.h. dass zwei Grenzwerte vorgegeben werden, einer für positive Veränderungsraten und ein weiterer für negative Veränderungsraten.

Der Ist-Wert der Regelgröße kann direkt gemessen werden. Er kann auch aufgrund von Messungen einer oder mehrerer anderer Messgrößen und der dabei gewonnenen Messwerte berechnet werden.

Die gewünschte Veränderung kann durch einen gewünschten Wert für die Stellgröße angegeben werden oder durch einen Betrag, um den der Wert der Stellgröße verändert werden soll.

Das Verfahren kann mithilfe von Software- und/oder Hardware-Komponenten implementiert werden. Zum Beispiel kann der Ratenbegrenzer, der im Rahmen des Verfahrens eingesetzt wird, eine Funktion eines Programms darstellen oder eine separate Hardwarekomponente eines Reglers bzw. Stellungsreglers.

Um eine etwaig zu starke Änderung des vorgegebenen Werts zu vermeiden, mit dem der Betrag der Veränderungsrate des Werts der Stellgröße begrenzt wird, kann vorgesehen werden, dass eine Veränderung des vorgegebenen Werts von dem ersten zum zweiten Wert oder von dem zweiten zum ersten Wert in einem Übergangszeitraum vorgegebener Dauer erfolgt. Der vorgegebene Wert nimmt während des Übergangszeitraums Werte zwischen dem ersten und dem zweiten Wert an. Auf diese Weise können Über- bzw. Dauerschwinger aufgrund einer plötzlichen Veränderung des vorgegebenen Werts vermieden werden.

Bevorzugt folgen die Werte zwischen dem ersten und dem zweiten Wert aufgetragen gegen die Zeit einem exponentiellen Verlauf. Dazu gehören nicht nur exponentielle Verläufe mit positivem Exponenten, bei denen die zeitlich verzögerte Veränderung des vorgegebenen Werts zunächst langsamer verläuft, sondern auch Verläufe mit negativem Exponenten, bei denen die Veränderung des vorgegebenen Werts zunächst schneller verläuft. Dabei kann der Exponent vorgegeben und zur Verbesserung der Regelgüte genutzt werden. Derartige Verzögerungen können bspw. mithilfe eines sogenannten PT1-Glieds umgesetzt werden.

Der vorgegebene Wert kann entweder als Betragswert vorgegeben werden oder mithilfe einer minimalen (negativen) und einer maximalen (positiven) Veränderungsrate vorgegeben werden. Dabei können die minimale und maximale Rate betragsmäßig gleich sein. Sie können jedoch auch unterschiedliche (Absolut-)Beträge aufweisen. Auf diese Weise kann die Zeit für ein Hoch- bzw. Herunterfahren der Regelgröße beeinflusst bzw. eingestellt werden.

Die gewünschte Veränderung des Werts der Stellgröße anhand des vorgegebenen Soll-Werts der Regelgröße und des bestimmten Ist-Werts der Regelgröße kann mithilfe eines P-, I-, PI-, PD- oder PID-Glieds bestimmt werden. Die Wahl des Glieds zur Bestimmung der gewünschten Veränderung des Werts der Stellgröße kann ebenfalls zur Verbesserung der Regelgüte eines Regelkreises genutzt werden.

Die gewünschte Veränderung des Werts der Stellgröße kann bspw. auch mithilfe einer Vorsteuerung bestimmt werden, die anhand einer bekannten oder im Vorfeld bestimmten Kennlinie dem vorgegebenen Soll-Wert einen ersten Schätzwert für die Stellgröße zuweist.

Die gewünschte Veränderung des Werts der Stellgröße kann Null sein. Die gewünschte Veränderung stellt jedoch in vielen Fällen einen neuen Wert für die Stellgröße dar oder eine Veränderung des Werts der Stellgröße.

In bevorzugten Ausführungsformen kann zusätzlich die Veränderungsrate des momentanen Werts der Stellgröße bestimmt und genutzt werden. Gerade bei Antrieben, die zu leistungsstark sind, kommt es dabei typischerweise vor, dass der momentane Wert der Stellgröße ab einem gewissen Zeitpunkt wieder zurückgeregelt werden muss, d.h. die Veränderungsrate des momentanen Werts der Stellgröße ändert ihr Vorzeichen. Aufgrund von Hysterese kann es jedoch wieder zu Verzögerungen kommen, bevor sich das Signal zum Zurückregeln bzw. der Vorzeichenwechsel der Veränderungsrate des momentanen Werts der Stellgröße auf den Ist-Wert der Regelgröße auswirkt. In diesen Fällen ist es typischerweise vorteilhaft, die Stellgröße ebenfalls schnell zu verändern, obwohl sich der Ist-Wert der Regelgröße bereits außerhalb der vorgegebenen Grenzen verändert. In bevorzugten Ausführungsformen wird demnach der vorgegebene Wert ebenfalls auf den ersten Wert festgelegt, wenn die Veränderungsrate des Ist-Werts der Regelgröße außerhalb der vorgegebenen Grenzen liegt und die Veränderungsraten des Ist-Werts der Regelgröße und des momentanen Werts der Stellgröße unterschiedliche Vorzeichen haben. Auf diese Weise können Hysteresereffekte und/oder Verzögerun-

gen aufgefangen werden, die auch dann auftreten, wenn sich der Ist-Wert der Regelgröße bereits ändert.

Die Veränderungsrate des momentanen Werts der Stellgröße kann bspw. anhand des zeitlichen Verlaufs des momentanen Werts der Stellgröße bestimmt werden. Sie kann auch mithilfe des gewünschten Werts und des momentanen Werts der Stellgröße bestimmt werden, insbesondere mithilfe der Differenz aus diesen beiden Werten. Anstelle des Vorzeichenwechsels der Veränderungsrate des momentanen Werts der Stellgröße kann demnach auch die Differenz zwischen dem gewünschten Wert und dem momentanen Wert der Stellgröße genutzt werden, um Hystereseeffekte und/oder Verzögerungen in den soeben beschriebenen Fällen bzw. der soeben beschriebenen Weise abzuschwächen.

In bevorzugten Ausführungsformen kann zudem die Veränderungsrate der Veränderungsrate des Ist-Werts der Regelgröße, d.h. bspw. die zweite zeitliche Ableitung des zeitlichen Verlaufs des Ist-Werts der Regelgröße, bestimmt und genutzt werden. Mithilfe der Veränderungsrate der Veränderungsrate des Ist-Werts der Regelgröße können Umkehrpunkte erkannt werden, an denen der Ist-Wert der Regelgröße ein Maximum oder Minimum erreicht und sich lediglich kurzfristig und nicht aufgrund von Hysterese und/oder Verzögerungen nicht ändert. Mit Hilfe der Veränderungsrate der Veränderungsrate des Ist-Werts können solche kurzfristigen Zustände von Zuständen unterschieden werden, in denen sich der Ist-Wert der Regelgröße längerfristig bzw. aufgrund Hysterese und/oder Verzögerungen nicht verändert. Hier kommen bekannte Methoden der Kurvendiskussion zum Einsatz.

Der vorgegebene Wert wird demnach nur auf den ersten Wert festgelegt, wenn die Veränderungsrate des Ist-Werts der Regelgröße und die Veränderungsrate der Veränderungsrate des Ist-Werts der Regelgröße innerhalb vorgegebener Grenzen liegen. Der vorgegebene Wert wird folgerichtig auf den zweiten Wert festgelegt, wenn die Veränderungsrate des Ist-Werts der Regelgröße und/oder die Veränderungsrate der Veränderungsrate des Ist-Werts der Regelgröße sich außerhalb der vorgegebenen Grenzen bewegt. Dabei werden für die Veränderungsrate des Ist-Werts der Regelgröße in vielen Fällen andere Grenzen vorgegeben als für die Veränderungsrate der Veränderungsrate des Ist-Werts der Regelgröße.

Wird zusätzlich die Veränderungsrate des momentanen Werts der Stellgröße bestimmt, wird in bevorzugten Ausführungsformen der vorgegebene Wert dennoch auf den ersten Wert festgelegt, wenn die Veränderungsrate des Ist-Werts der Regelgröße außerhalb der vorgegebenen Grenzen liegt und die Veränderungsraten der Ist-Werte der Regelgröße und Stellgröße unterschiedliche Vorzeichen haben. Das Vermeiden von Hystereseeffekten und/oder Verzögerungen hat somit Vorrang gegenüber einer vermeintlich falschen Zuordnung von Umkehrpunkten.

Die Aufgabe wird zudem gelöst durch einen Stellungsregler mit einem Strom-Druck-Wandler zur Regelung des Drucks eines Fluids in einem fluidischen Antrieb und/oder zur Regelung der Position eines beweglichen Glieds mithilfe eines fluidischen Antriebs und mit Mitteln, die geeignet sind, die Schritte eines der soeben vorgeschlagenen Verfahren auszuführen. Der Stellungsregler kann hierzu einen Drucksensor zum Messen des Drucks des Fluids in dem Antrieb und/oder einen Positionssensor zum Messen der Ist-Position des beweglichen Glieds aufweisen oder mit dem Drucksensor und/oder Positionssensor verbunden sein, bspw. über eine entsprechende Schnittstelle bzw. einen entsprechenden Eingang.

Der Drucksensor kann den Ist-Wert des Drucks des Fluids im Antrieb messen. Die Regelgröße kann demnach der Druck des Fluids in dem Antrieb sein oder eine von dem Druck des Fluids in dem Antrieb abhängige Größe.

Der Positionssensor kann den Ist-Wert der Position des beweglichen Glieds messen. Die Regelgröße kann demnach die Position des beweglichen Glieds sein oder eine von der Position des beweglichen Gliedes abhängige Größe.

Der Druck des Fluids in dem Antrieb kann zudem mithilfe eines Druck-Druck-Wandlers, z.B. mithilfe eines Luftleistungsverstärkers, verstärkt werden. Auf diese Weise lassen sich auch mit schwachen Strom-/Spannungssignalen starke fluidische Signale erzeugen und bspw. zum Betrieb eines fluidischen Antriebs nutzen.

Ferner wird die Aufgabe gelöst durch ein Stellventil zur Regelung einer Prozessfluidströmung einer prozesstechnischen Anlage, wobei das Stellventil einen Stellungsregler aufweist, wie er soeben beschrieben wurde.

Eine Lösung der Aufgabe stellt zudem ein Computerprogramm dar, umfassend Befehle, die bewirken, dass eine der soeben beschriebenen Vorrichtungen eines der vorgeschlagenen Verfahren ausführt.

Ein computerlesbares Medium, auf dem das soeben beschriebene Computerprogramm gespeichert ist, löst ebenfalls die Aufgabe.

Weitere Einzelheiten und Merkmale ergeben sich aus der nachfolgenden Beschreibung eines bevorzugten Ausführungsbeispiels in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf das Ausführungsbeispiel beschränkt.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    einen Regelkreis mit Mitteln, die geeignet sind, die Schritte eines der vorgeschlagenen Verfahren auszuführen;

Fig. 2     eine Regelstrecke mit einem Strom-Druck-Wandler;

Fig. 3     die Strom-Druck-Kennlinie der in Fig. 2 gezeigten Regelstrecke;

Fig. 4     einen zeitlichen Verlauf des Ist-Werts des Drucks des in Fig. 1 dargestellten Regelkreises mit der in Fig. 2 dargestellten Regelstrecke mit hystereseabhängiger Ratenbegrenzung bei einem Sprung des Sollwerts in einem Zeitraum von 0 bis 5,5 s;

Fig. 5     den zeitlichen Verlauf gem. Fig. 4 über einen kürzeren Zeitraum, d.h. von 0 bis 0.7 s;

Fig. 6     einen zeitlichen Verlauf des Werts yRL der Stellgröße über den Zeitraum der Fig. 5 für das in Fig. 4 gezeigte Beispiel;

Fig. 7     einen zeitlichen Verlauf des gewünschten Werts y der Stellgröße zusammen mit dem momentanen Wert yRL der Stellgröße über den Zeitraum der Fig. 5 für das in Fig. 4 gezeigte Beispiel;

Fig. 8     einen zeitlichen Verlauf des Zustandsflags zF und des Zustandswerts z über den Zeitraum der Fig. 5 für das in Fig. 4 gezeigte Beispiel;

Fig. 9     einen zeitlichen Verlauf des Werts pr über den Zeitraum der Fig. 5 für das in Fig. 4 gezeigte Beispiel;

Fig. 10     einen zeitlichen Verlauf des Ist-Werts des Drucks des in Fig. 1 dargestellten Regelkreises mit der in Fig. 2 dargestellten Regelstrecke ohne hystereseabhängige Ratenbegrenzung; und

Fig. 11     einen Ablaufplan eines erfindungsgemäßen Verfahrens.

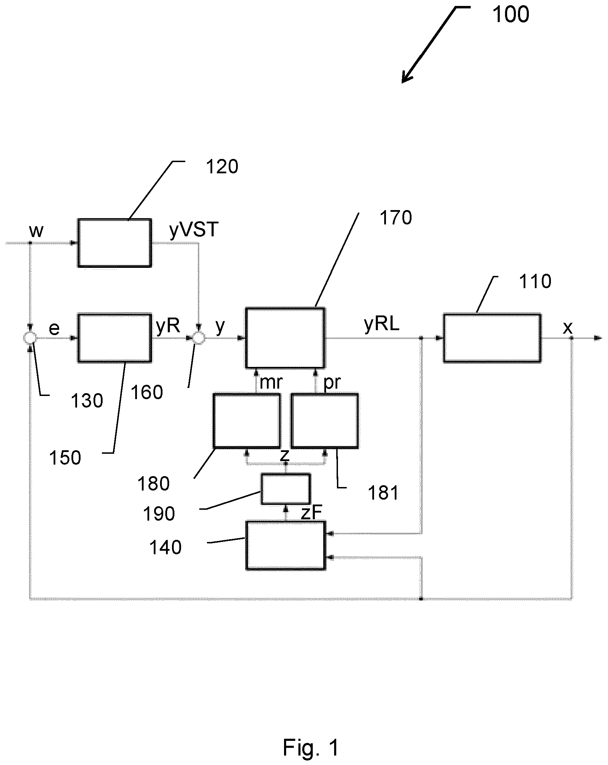

Fig. 1 zeigt einen Regelkreis 100 für eine Regelgröße einer Regelstrecke 110. Dem Regelkreis 100 wird ein Soll-Wert w für die Regelgröße der Regelstrecke 110 vorgegeben. Der Soll-Wert w wird in eine Vorsteuerung 120 (siehe unten) eingespeist.

Die Regelstrecke 110 weist einen fluidischen Antrieb und einen Sensor zum Bestimmen eines Ist-Werts x der Regelgröße auf. Der Ist-Wert x der Regelgröße wird von der Regelstrecke 110 zu einer Einheit 140 zum Erkennen von Verzögerungen und/oder Hysterese in der Regelstrecke 110 geleitet sowie zu der Einheit 130, die aus dem vorgegebenen Soll-Wert w und dem Ist-Wert x eine Regelabweichung e = w - x berechnet.

Die Regelabweichung e wird anschließend an einen PID-Regler 150 übermittelt. Der PID-Regler 150 berechnet aus der Regelabweichung e eine gewünschte Veränderung yR für eine Stellgröße der Regelstrecke 110. Der Wert yR wird vom PID-Regler 150 an eine Einheit 160 übermittelt.

Die Einheit 160 empfängt von der Vorsteuerung 120 einen Kennlinienwert yVST für die Stellgröße. Den Kennlinienwert yVST bestimmt die Vorsteuerung 120 mithilfe einer gespeicherten Kennlinie, mit der jedem vorgegebenen Soll-Wert w ein Kennlinienwert yVST der Stellgröße zugewiesen werden kann.

Die Einheit 160 bildet aus den Werten yR und yVST einen gewünschten Wert y für die Stellgröße der Regelstrecke 110. Der gewünschte Wert y wird von der Einheit 160 an einen Ratenbegrenzer 170 übermittelt.

Der Ratenbegrenzer 170 vergleicht den gewünschten Wert y mit dem momentanen Wert yRL für die Stellgröße. Der Ratenbegrenzer 170 übermittelt anschließend den neuen Wert yRL für die Stellgröße an die Regelstrecke 110.

Der Ratenbegrenzer 170 passt den neuen Wert yRL an den gewünschten Wert y an. Dabei verändert er den Wert yRL mit einer Veränderungsrate, deren Betrag einen vorgegebenen maximalen Wert nicht überschreitet. Der Ratenbegrenzer kann dabei den Wert yRL direkt verändern, oder zunächst lediglich die Veränderungsrate, mit der anschließend der nächste Wert yRL berechnet wird.

Ist der Wert y bspw. kleiner als oder gleich dem Wert yRL, begrenzt der Ratenbegrenzer die Veränderungsrate auf eine minimale Rate mit dem Wert mr (mr ist in dem Fall negativ). Der Wert mr wird dem Ratenbegrenzer 170 von einer Einheit 180 übermittelt. Ist y größer als yRL, ist die Veränderungsrate durch eine maximale Rate mit dem Wert pr (pr ist positiv). Der Wert pr wird dem Ratenbegrenzer 170 von einer Einheit 181 übermittelt. Wird der Wert der Stellgröße bspw. in % angegeben, kann mr Werte im Bereich von bspw. -200 %/s bis -0,01 %/s, -100 %/s bis -0,1 %/s, -50 %/s bis -1 %/s, -40 %/s bis -10 %/s oder -30 %/s bis -20%/s annehmen. Ähnliches gilt für pr, d.h. pr kann die Werte 0,01 %/s bis 200 %/s, 0,1 %/s bis 100 %/s, 1 %/s bis 50 %/s, 10 %/s bis 40 %/s oder 20 %/s bis 30 %/s annehmen.

Die Einheiten 180 und 181 berechnen die Werte mr und pr anhand eines Zustandswerts z. Der Zustandswert z wird den Einheiten 180 und 181 von einem Zeitglied 190 übermittelt. Das Zeitglied 190 bestimmt den Zustandswert z anhand eines Werts zF eines Zustandsflags, das von der Einheit 140 ausgegeben wird.

Der Wert zF des Zustandsflags wird von der Einheit 140 anhand der zeitlichen Veränderung sowohl des Ist-Werts x der Regelgröße der Regelstrecke 110 und des Werts yRL der Stellgröße bestimmt. Durch das Bestimmen der zeitlichen Veränderung des Ist-Werts x der Regelgröße und des Werts yRL der Stellgröße erkennt die Einheit 140, ob und wie sich der Ist-Wert x der Regelgröße gerade verändert bzw. ob und wie sich der Ist-Wert x der Regelgröße gerade verändern sollte. Sollte sich bspw. der Ist-Wert x aufgrund einer Änderung des Werts yRL ändern, ändert sich aber nicht oder überschreitet die Änderung des Ist-Werts x vorgegebene Grenzen nicht, erkennt die Einheit 140, dass sich die Regelstrecke in einem Hysteresezustand befindet. Die Einheit 140 setzt den Wert zF des Zustandsflags entsprechend, d.h. bspw. auf den Wert 1. Andernfalls setzt sie den Wert des Zustandsflags zF auf den Wert 0.

Wenn die Einheit 140 das Zustandsflag zF ändert, passt das Zeitglied 190 den Wert z mit einer vorgegebenen Veränderungsrate von bspw. 0,1 s$^{-1}$ bis 1000 s$^{-1}$, 0,2 s$^{-1}$ bis 500 s$^{-1}$, 0,5 s$^{-1}$ bis 200 s$^{-1}$, 1 s$^{-1}$ bis 100 s$^{-1}$, 2 s$^{-1}$ bis 50 s$^{-1}$, 5 s$^{-1}$ bis 20 s$^{-1}$ bzw. -0,1 s$^{-1}$ bis -1000 s$^{-1}$, -0,2 s$^{-1}$ bis -500 s$^{-1}$, -0,5 s$^{-1}$ bis -200 s$^{-1}$, -1 s$^{-1}$ bis -100 s$^{-1}$, -2 s$^{-1}$ bis -50 s$^{-1}$, -5 s$^{-1}$ bis -20 s$^{-1}$ an den neuen Wert von zF an. Wechselt das Zustandsflag zF bspw. von 0 auf 1 und ist z = 0, verändert das Zeitglied den Wert z innerhalb einer durch die Veränderungsrate des Werts z vorgegebenen Zeitspanne auf 1, d.h. bspw. innerhalb einer Zeitspanne von 10 s, 5 s oder 2 s, 1 s, 0,5 s, 0,2 s, 0,1 s, 0,05 s, 0,02 s, 0,01 s, 0,005 s, 0,002 s oder 0,001 s, wenn die Veränderungsrate 0,1 s$^{-1}$, 0,2 s$^{-1}$, 0,5 s$^{-1}$ , 1 s$^{-1}$, 2 s$^{-1}$, 5 s$^{-1}$, 10 s$^{-1}$, 20 s$^{-1}$, 50 s$^{-1}$, 100 s$^{-1}$, 200 s$^{-1}$, 500 s$^{-1}$ oder 1000 s$^{-1}$ beträgt.

Nach der vorgegebenen Zeitspanne weisen z und zF wieder denselben Wert auf, sofern sich der Wert zF des Zustandsflags nicht zwischenzeitlich geändert hat. Hat er sich zwischenzeitlich geändert, reduziert das Zeitglied 190 den Wert z mit einer Veränderungsrate von bspw. -0,1 s$^{-1}$, -0,2 s$^{-1}$ oder -0,5 s$^{-1}$ bis - sofern das Zustandsflag zF seinen Wert beibehält - z wieder gleich 0 ist.

Bevorzugt folgen die Werte z somit einem zeitlich linearen Verlauf. Andere Verläufe wie bspw. ein exponentieller, sinus- oder cosinusförmiger Verlauf sind jedoch ebenfalls möglich.

Das Zeitglied 190 übermittelt den Wert z an die Einheiten 180 und 181. Anhand des Werts z legt die Einheit 180 den Wert mr und die Einheit 181 den Wert pr fest. Für den Wert mr wählt die Einheit 180 einen Wert, der größer als oder gleich einem minimalen Wert mr1 und kleiner als oder gleich einem maximalen Wert mr0 ist (mr0 und mr1 sind negativ). Dabei wählt die Einheit 180 den Wert mr = mr1, wenn z = 1, und mr = mr0, wenn z = 0, ist und einen Wert zwischen mr1 und mr0, wenn 0 < z < 1. Hierzu verwendet die Einheit 180 bspw. eine Funktion f(z), wobei f(z) = z, f(z) = sin ( z $\pi$ / 2 ), f(z) = 1 - cos ( z $\pi$ / 2 ) oder f(z) = ( 1 - exp(z) ) / ( 1 - exp(1) ) ist und berechnet mr anhand der Formel mr = mr0 + (mr1 - mr0 ) f(z). Der Wert pr kann in derselben Weise - *mutatis mutandis* - von der Einheit 181 berechnet werden, wobei pr größer als oder gleich einem minimalen Wert pr0 (für z = 0) und kleiner als oder gleich einem maximalen Wert pr1 (für z = 1) ist (pr0 und pr1 sind positiv).

Durch die Anpassung der Werte mr und pr an den Zustandswert z bzw. das Zustandsflag zF kann die Regelgüte des Regelkreises 100 verbessert werden. Verändert sich der Ist-Wert x Regelgröße trotz einer Änderung des Werts yRL der Stellgröße nicht (zF=1), werden den Werten mr und pr Werte zugewiesen, die betragsmäßig größer sind. Der Regelkreis kann damit Zustände schneller überwinden, in denen bspw. Verzögerungen und Hysterese eine Veränderung des Ist-Werts x der Regelgröße blockieren. Verändert sich anschließend der Ist-Wert x der Regelgröße bzw. reagiert die Regelstrecke auf die veränderten Werte yRL der Stellgröße (zF=0), werden die Werte mr und pr reduziert. Auf diese Weise kann ein Überschwingen des Regelkreises 100 verhindert oder zumindest reduziert werden. Dabei wird die Verbesserung der Regelgüte auch dann erzielt, wenn die Verzögerung bzw. Hysterese plötzlich bzw. unerwartet auftritt.

Das Zeitglied 190 verhindert zu schnelle Änderungen der Werte mr und pr.

Die Werte mr und pr können zudem dem Betrag nach unterschiedlich gewählt werden. Dies kann nicht nur zur Verbesserung der Regelgüte genutzt werden. Es können auch unterschiedliche Regelgüten bzw. Regelzeiten für eine Regelung hin zu größeren bzw. kleineren Werten des Ist-Werts x der Regelgröße umgesetzt werden.

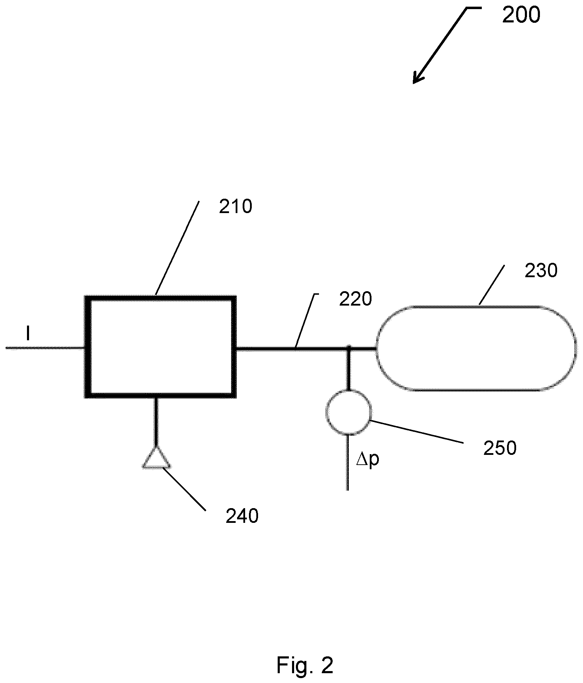

Fig. 2 zeigt ein Beispiel für eine Regelstrecke 200. Die Regelstrecke 200 weist einen Strom-Druck-Wandler 210 auf, der mit einem Stromsignal I beaufschlagt wird. Der Strom-Druck-Wandler 210 ist an eine Druckluftversorgung 240 angeschlossen. Die Druckluftversorgung 240 stellt Druckluft mit einem konstanten Druck bereit. Mithilfe eines beweglichen Stellelements und eines Luftleistungsverstärkers kann der Strom-Druck-Wandler 210 in bekannter Weise den Druck der Druckluftversorgung 240 auf einen gewünschten Wert reduzieren.

Der Strom-Druck-Wandler 210 ist mit einer Druckluftleitung 220 an eine Druckluftkammer 230 eines pneumatischen Antriebs angeschlossen. Der Strom-Druck-Wandler 210 kann abhängig von der Stärke des Stromsignals I den Druck in der Druckluftleitung 220 und der Druckluftkammer 230 verändern und damit den pneumatischen Antrieb steuern.

Der Druck in der Druckluftleitung 220 wird mithilfe eines Druckmessers 250 bestimmt. Der Druckmesser 250 gibt als Ergebnis der Messung des Drucks den gemessenen Ist-Wert $\Delta$p des Drucks in der Druckluftleitung 220 (und damit auch in der Druckluftkammer 230) abzüglich des Umgebungsdrucks aus.

Die Druckluftversorgung 240 stellt häufig Druckluft mit einem Druck von bis zu 7 bar zur Verfügung. Die Druckluftkammer 230 weist ein Volumen von beispielsweise 0,1 l auf, was sehr klein ist bezogen auf die Luftleistung, die der Strom-Druck-Wandler 210 bereitstellen kann. Sie kann von dem Strom-Druck-Wandler 210 mithilfe der Druckluftversorgung 240 und der Druckluftleitung 220 in vielen Anlagen mit einer Luftleistung von bis zu 8,5 m$^3$/h beim Belüften und 14 m$^3$/h beim Entlüften bei 6 bar Differenzdruck versorgt werden. Die Luftleistung des Strom-Druck-Wandlers ist demnach viel zu groß für das Volumen der Druckluftkammer 230. Dadurch stellt die Regelstrecke 200 ein sehr schnelles, dynamisches System dar und ist schon aus diesem Grund mit herkömmlichen Methoden der Regeltechnik schwer zu regeln. Es kommt jedoch noch ein weiteres Problem hinzu. Mit den genannten Parametern lassen sich Reaktionszeiten von 0,1 bis 0,2 s erreichen, in denen das Volumen auf den gewünschten Druck gebracht werden kann.

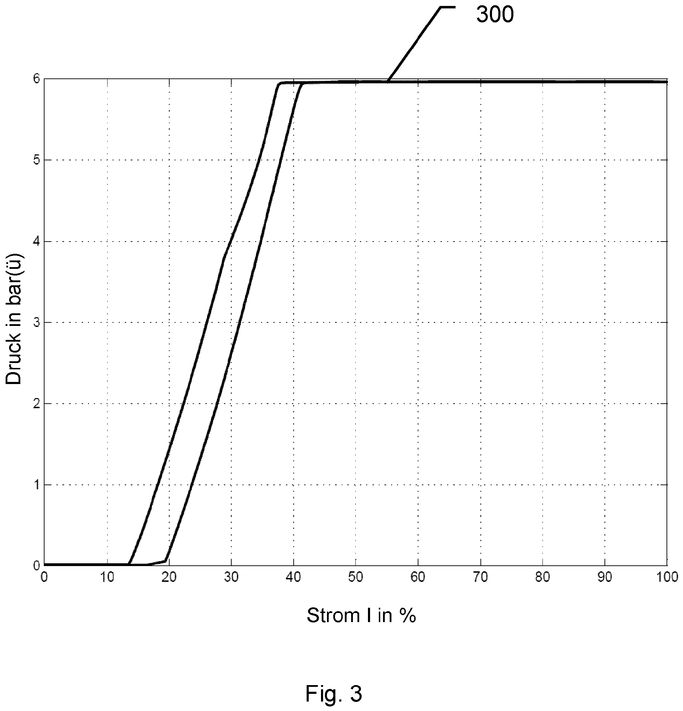

Fig. 3 zeigt die quasi-statische Strom-Druck-Kennlinie 300 der Regelstrecke 200. Die Strom-Druck-Kennlinie 300 der Regelstrecke 200 zeigt eine stark ausgeprägte Hysterese. Die Kennlinie 300 ist demnach aus zwei Ästen aufgebaut: einem Ast fürs Belüften (rechter Ast) und einem Ast fürs Entlüften (linker Ast) der Druckluftkammer 230. Der Strom ist in Prozent angegeben, wobei 100 % einem Stromwert von 1,6 mA entsprechen.

Die Hysterese der Kennlinie 300 ist in unterschiedlichen Bereichen unterschiedlich stark ausgeprägt. Im Druckbereich von 0,5 auf 1,0 bar(ü) (d.h. bei 0,5 bis 1,0 bar über dem Umgebungsdruck) kann die relative Hysterese mit einer Stärke von ca. 300 % angegeben werden. Schließlich liegen die Stromwerte auf dem rechten Ast der Kennlinie (Belüften) in einem Bereich von 22 % bis 24 % und auf dem linken Ast (zum Entlüften) in einem Bereich von 18 % bis 16 %. Beide Bereiche überspannen somit ca. 2 %. Im Verhältnis hierzu beträgt der Abstand der Äste - z.B. gemessen bei einem vorgegebenen Druck von 0,5 bar - das Dreifache, d.h. 6 %. Dies entspricht einer relativen Hysterese mit einer Stärke von 6 % / 2 % = 3 bzw. 300 %.

Die stark ausgeprägte Hysterese der Regelstrecke 200 hat ihren Ursprung einerseits in der Art wie der Strom-Druck-Wandler sein Stellelement bewegt. Der Strom-Druck-Wandler 210 bewegt sein bewegliches Stellelement mithilfe eines Elektromagneten, was starke Hysterese-Effekte zeigt. Andererseits trägt der Einsatz eines nachgeschalteten Luftleistungsverstärkers ebenfalls zur Hysterese der Regelstrecke 200 bei (bspw. bei Einsatz eines bekannten Doppelkegel-Luftleistungsverstärkers).

Die zu große Luftleistung des Strom-Druck-Wandlers 210 in Kombination mit der ausgeprägten Hysterese der Regelstrecke 200 stellt in Summe ein System dar, das in vielen Fällen ohne Ratenbegrenzer nicht stabil geregelt werden kann. Selbst beim Einsatz eines herkömmlichen Ratenbegrenzers treten in vielen Fällen langlebige Schwingungen um den Soll-Wert w der Regelgröße auf, mit entsprechend langen Totzeiten.

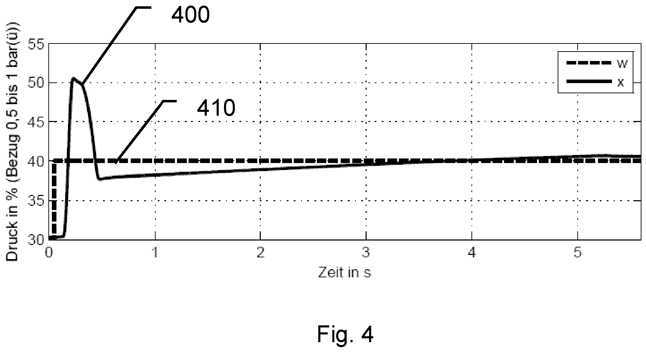

Fig. 4 zeigt einen zeitlichen Verlauf 400 (durchgezogene Linie) des Ist-Werts x der Regelgröße sowie einen zeitlichen Verlauf 410 (gestrichelte Linie) des Soll-Werts w der Regelgröße einer Ausführungsform des Regelkreises 100 mit der betriebenen Regelstrecke 110, 200. Die zeitlichen Verläufe 400 und 410 sind über einen Zeitraum von 0 bis ca. 5,5 s gezeigt. Dabei ist der Ist-Wert x der Regelgröße der Ist-Wert Δp der Regelstrecke 200 umgerechnet in %, wobei x = 0 % einem Differenzdruck Δp von 0,5 bar und x = 100 % einem Differenzdruck Δp von 1 bar entspricht. Der zeitliche Verlauf liegt damit in dem Druckbereich der Kennlinie 300, in dem die relative Hysterese ca. 300 % beträgt (siehe Fig. 3).

Der Ist-Wert x und der Soll-Wert w sind anfangs identisch. Nach ca. 0,05 s springt jedoch der Soll-Wert w von 30 % auf 40 %. Der Soll-Wert w wird anschließend nicht mehr verändert.

Dem zeitlichen Verlauf 400 ist zu entnehmen, dass der Ist-Wert x der Regelgröße dem Sprung des Soll-Werts w bei ca. 0,05 s mit einer Verzögerung von ca. 0,1 s folgt. Dabei schießt er zunächst über den Soll-Wert w hinaus und erreicht dabei ein Maximum bei ca. 50 % des betrachteten Druckbereichs von 0,5 bis 1,0 bar. Nach diesem anfänglichen Überschießen nähert sich der Ist-Wert x relativ zügig dem Soll-Wert w von 40 %. Nach ca. 0,5 s kriecht der Ist-Wert x dabei nur noch langsam auf den Soll-Wert w zu. Das System ist nach etwa 5 s stabil ausgeregelt.

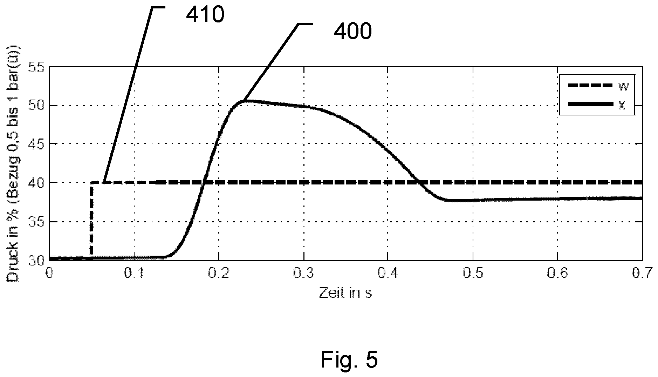

Fig. 5 zeigt zur besseren Übersicht über die anfängliche Dynamik nochmals die zeitlichen Verläufe 400 und 410, allerdings über einen kürzeren Zeitraum, und zwar von 0 bis ca. 0,7 s.

Wie der Figur entnommen werden kann, ändert sich der Ist-Wert x der Regelgröße anfangs nahezu nicht, da er mit dem zu diesem Zeitpunkt gültigen Soll-Wert w von 30% fast übereinstimmt (die kleine Abweichung zwischen dem Ist-Wert x und dem Soll-Wert w bei 0s ist einem vorhergehenden Regelvorgang zuzuschreiben). Der Soll-Wert w wird nach ca. 0,05 s auf 40% angehoben. Der Ist-Wert x der Regelgröße folgt dieser Veränderung des Soll-Werts w mit einer Verzögerung von ca. 0,1 s. Nach ca. 0,18 s erreicht der Ist-Wert x kurzzeitig den Soll-Wert w, entwickelt sich danach aber wieder vom Soll-Wert w weg. Bei ca. 0,22 s erreicht der Ist-Wert x der Regelgröße sein Maximum bei einem Wert von ca. 50% und nähert sich danach wieder dem Soll-Wert w an. Dabei entwickelt sich der Ist-Wert x der Regelgröße zunächst relativ langsam zum Soll-Wert w hin, nimmt dann aber Fahrt auf. Nach ca. 0,42 s erreicht der Ist-Wert x wieder den Soll-Wert w. Hiernach zeigt das System keine ausgeprägten Überschwinger mehr.

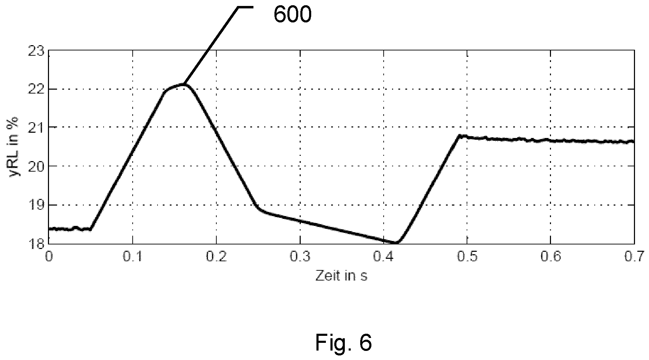

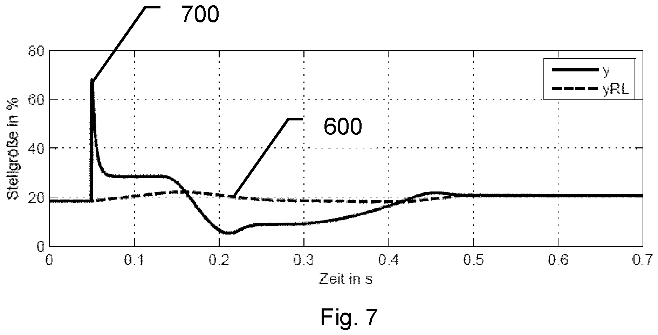

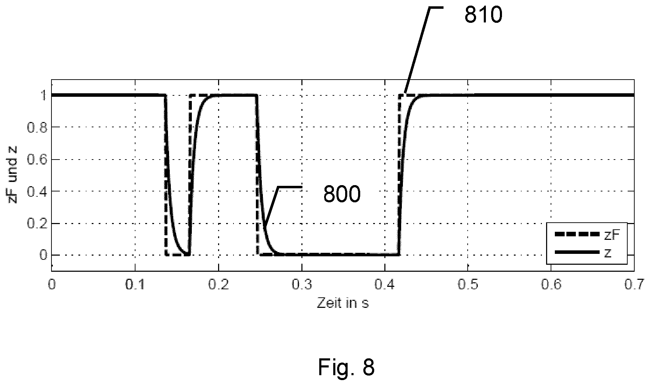

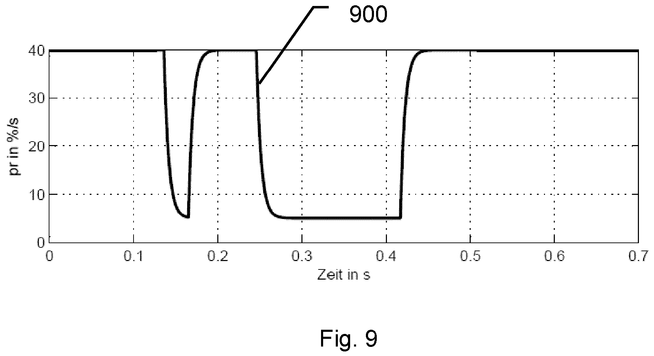

Das Verhalten des zeitlichen Verlaufs 400 soll im Folgenden näher erläutert werden. Dazu werden zunächst die dem zeitlichen Verlauf 400 entsprechenden Werte yRL (Fig. 6) und die gewünschten Werte y der Stellgröße (Fig. 7) diskutiert. Als nächstes werden die entsprechenden Werte des Zustandswerts z und des Zustandsflags zF betrachtet (Fig. 8), und abschließend die Werte mr und pr (Fig. 9), mit denen die Veränderungsrate des Werts yRL der Stellgröße begrenzt wird.

Fig. 6 zeigt einen zeitlichen Verlauf 600 des momentanen Werts yRL der Stellgröße. Der Wert yRL ist dabei so normiert, dass yRL = 0 % dem Strom-Wert von I = 0 % (0 mA) und yRL = 100 % dem Strom-Wert von 100 % (1,6 mA) in Fig. 3 entsprechen. Hierbei ist zu beachten, dass der zeitliche Verlauf 600 keinem quasi-statischen Grenzfall wie in Fig. 3 entspricht. Die Werte yRL des zeitlichen Verlaufs 600 liegen dementsprechend nicht auf den Ästen der Kennlinie 300, sondern zwischen den Stromwerten bzw. den Werten für die Stellgröße yRL, die gemäß der Kennlinie 300 dem Druckbereich von 0,5 bis 1 bar(Ü) zugeordnet sind. Die Äste der Kennlinie 300 bilden ohnehin lediglich den quasi-statischen Fall des Be und Entlüftens ab. Sie bilden demnach keine absolute Grenze, insbesondere nicht für dynamische Verläufe, die stark vom quasi-statischen Grenzfall abweichen. Das heißt u.a., dass der Wert yRL der Stellgröße auch Werte annehmen kann, die außerhalb des Bereichs liegen können, der zwischen den Ästen der Kennlinie 300 liegt.

Der zeitliche Verlauf 600 wurde parallel zu dem Verlauf 400 der oben beschriebenen Ausführungsform des Regelkreises 100 aufgezeichnet. Der momentane Wert yRL der Stellgröße ändert sich anfangs - abgesehen von kleinen Schwankungen von weniger als 0,1 % - nicht. Sobald der Soll-Wert w nach ca. 0,05 s auf den Wert von 40 % springt, ändert sich der momentane Wert yRL der Stellgröße ebenfalls. Bis ca. 0,14 s wächst er dabei mit einer Rate von ca. 40 %/s an.

Von ca. 0,14 s bis ca. 0,17 s wächst der Wert yRL nur noch mit deutlich reduzierten Veränderungsraten. Dies entspricht dem Zeitraum, in dem der Ist-Wert x der Regelgröße beginnt dem Soll-Wertsprung bei 0,05 s zu folgen und sich dem Soll-Wert w von unten her zu nähern.

Bevor der Ist-Wert x der Regelgröße den Soll-Wert w erreicht, d.h. ab 0.17 s, sinkt der momentane Wert yRL der Stellgröße bereits wieder, und zwar mit einer Rate von -40 %/s. Nach ca. 0,25 s fällt der momentane Wert yRL der Stellgröße nur noch mit einer Rate von ca. -5 %/s.

Der momentane Wert yRL der Stellgröße steigt nach 0,42 s wieder an, und zwar wieder mit einer Veränderungsrate von ca. 40 %/s. Erst nach 0,48 s verändert sich der Wert yRL der Stellgröße nur noch sehr langsam. Die Veränderungsrate ist dabei nicht mehr vom Ratenbegrenzer 170 begrenzt, was sich u.a. an kleinen Schwankungen des Werts yRL äußert, die auch anfangs zu sehen waren (d.h. von 0 bis 0,05 s).

Fig. 7 zeigt einen zeitlichen Verlauf 700 des gewünschten Werts y der Stellgröße. Er wurde parallel zu den Verläufen 400 bzw. 600 der oben beschriebenen Ausführungsform des Regelkreises 100 aufgezeichnet. Aufgrund des sprunghaften Anstiegs des Soll-Werts w zeigt der gewünschte Wert y anfangs ein ausgeprägtes Maximum. Während der gewünschte Wert y anfangs über dem Wert yRL liegt, sinkt er ab ca. 0,17 s auf Werte unterhalb des Werts yRL ab. Dementsprechend fällt auch der Wert yRL ab ca. 0.17 s wieder (vgl. den Schnittpunkt der beiden Verläufe bei 0.17 s). Dies ändert sich nach ca. 0,42 s. Der gewünschte Wert y liegt dann wieder über dem Wert yRL. Der Wert yRL steigt demnach wieder an. Nach 0.48 s weisen der gewünschte Wert y und der Wert yRL der Stellgröße nur noch geringe Abweichungen auf.

Fig. 8 zeigt einen zeitlichen Verlauf 800 des Zustandswerts z (durchgezogene Linie) und einen zeitlichen Verlauf 810 des Zustandsflags zF (gestrichelte Linie). Beide wurden parallel zu den Verläufen 400, 600 und 700 aufgezeichnet. Der zeitliche Verlauf 810 zeigt, dass sich das System anfangs in einem Hysterese-Zustand befindet (z=1). Nach ca. 0,14 s verlässt das System seinen Hysterese-Zustand (z fällt auf 0 ab), was der Veränderung des Ist-Werts x der Regelgröße bei ca. 0,14 s entspricht (vgl. bspw. Fig. 5).

Nach ca. 0,17 s erkennt der Regelkreis wieder einen Hysterese-Zustand, und das obwohl sich der Ist-Wert x der Regelgröße stärker zu dem Soll-Wert w hinbewegt als bei 0,14 oder 0,15 s. Jedoch übersteigt zu diesem Zeitpunkt der Wert yRL bereits den gewünschten Wert y (vgl. Fig. 7), so dass der Wert yRL wieder zurückgeregelt wird. Dieses Zurückregeln geschieht mit einer Rate von -40 %/s (siehe Fig. 6). Schließlich sind aufgrund der Struktur der Kennlinie 300 des Regelkreises bzw. der ausgeprägten Hysterese in dem betrachteten Druckbereich von 0,5 bis 1 bar(ü) Verzögerungen beim Zurückregeln zu erwarten, die mit der gewählten Rate von -40%/s schnell überwunden werden können.

Sobald der Ist-Wert x der Regelgröße das Maximum überwunden hat und sich wieder in Richtung des Soll-Werts w bewegt, ist der Hysterese-Zustand überwunden. Der Zustandswert z fällt auf 0 ab und bleibt bis ca. 0,42 s auf diesem Wert.

Der zeitliche Verlauf 800 des Zustandswert z folgt dem zeitlichen Verlauf 810 des Zustandsflags zF. Das Zeitglied 190 sorgt dabei jedoch für eine Verzögerung von ca. 0,03 s.

Fig. 9 zeigt einen zeitlichen Verlauf 900 des Werts pr. Der zeitliche Verlauf 900 wurde parallel zu den Verläufen 400, 600, 700 und 800 aufgezeichnet. Der Wert pr ist durch

$$pr = ( 5 \text{ \%/s} + z \cdot 35 \text{ \%/s} )$$

gegeben. Der Wert mr ist dabei durch

$$mr = -pr$$

gegeben.

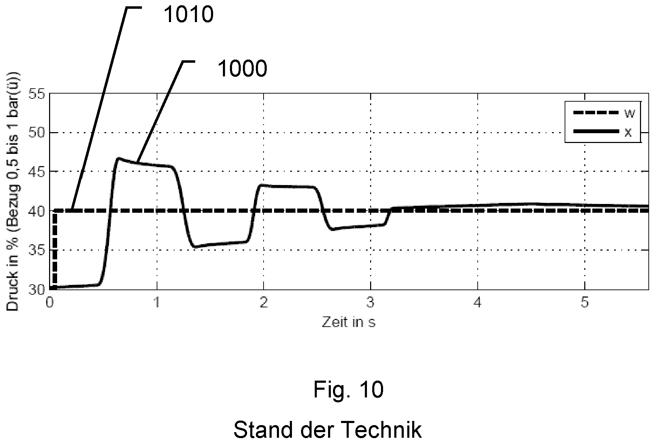

Fig. 10 zeigt zum Vergleich einen zeitlichen Verlauf 1000 des Ist-Werts x (durchgezogene Linie) der Regelgröße sowie einen zeitlichen Verlauf 1010 (gestrichelte Linie) des SollWerts w der Regelgröße derselben Ausführungsform wie in Fig. 4, wobei jedoch die Werte mr und pr zu jedem Zeitpunkt auf die Werte -5 %/s und +5 %/s festgelegt wurden, d.h. der zeitliche Verlauf 1000 wurde mit einer Ratenbegrenzung nach dem Stand der Technik erzeugt.

Der Ist-Wert x der Regelgröße ändert sich auch ohne hystereseabhängige Ratenbegrenzung anfangs nicht. Der Soll-Wert w wird nach ca. 0,05 s - wie zuvor beim zeitlichen Verlauf 400 - auf 40 % angehoben. Der Ist-Wert x der Regelgröße folgt dieser Veränderung des Soll-Werts w mit einer Verzögerung von ca. 0,4 s. Danach zeigt das System ausgeprägte und langlebige Schwingungen um den angestrebten Soll-Wert von 40 %. An dieser Stelle sei angemerkt, dass diese Schwingungen noch ausgeprägter und langlebiger wären, wenn mr < -5 %/s und pr > 5 %/s gewählt werden würde. Ohne Ratenbegrenzung hätten die Schwingungen eine Amplitude von ca. 20 %, auch noch 5 s nach dem Soll-Wert-Sprung bei 0,05 s (nicht gezeigt).

Der Vergleich der Figuren 4 und 10 zeigt, dass eine hystereseabhängige Ratenbegrenzung zunächst zu einem etwas ausgeprägteren Überschwingen führen kann. In Fig. 4 beträgt das Überschwingen am ersten Umkehrpunkt ca. 11 % anstatt ca. 7 % wie in Fig. 10. Dies ist der zu Beginn schnelleren Veränderung des Werts yRL der Stellgröße geschuldet. Schließlich pendelt sich der Regelkreis in Fig. 4 jedoch relativ zügig nahe dem Soll-Wert w ein. Die Regelabweichung bleibt nach ca. 2 s bereits unter 1 %. Im Vergleich hierzu bleibt die Regelabweichung mit der konstanten Ratenbegrenzung gem. Fig. 5 erst nach ca. 5 s unter 1 %.

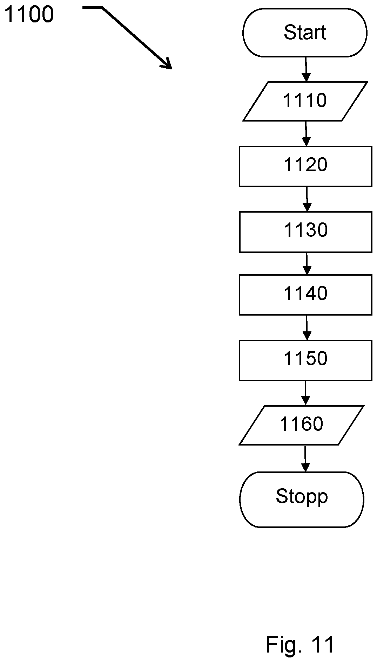

Fig. 11 zeigt einen Ablaufplan einer bevorzugten Ausführungsform eines erfindungsgemäßen Verfahrens 1100, das auf dem Regelkreis 100 abläuft. Das Verfahren beginnt mit Schritt 1110, in dem die Verfahrensparameter vorgegeben werden, insbesondere der Soll-Wert w der Regelgröße. In Schritt 1120 wird der Ist-Wert x der Regelgröße sowie die Veränderungsrate des Ist-Werts x der Regelgröße bestimmt. Anhand des in Schritt 1120 bestimmten Ist-Werts x der Regelgröße sowie der Veränderungsrate des Ist-Werts x der Regelgröße wird in Schritt 1130 eine gewünschte Veränderung y des Ist-Werts yRL der Stellgröße bestimmt. Die gewünschte Veränderung y wird anschließend in Schritt 1140 an den Ratenbegrenzer 170 geleitet, der in Schritt 1150 die gewünschte Veränderung y mit dem momentanen Wert yRL vergleicht und in eine Veränderung des Ist-Werts yRL umsetzt. Dabei lässt der Ratenbegrenzer 170 nur Veränderungen des Ist-Werts yRL zu, deren Betrag kleiner als oder gleich einem vorgegebenen Wert ist, wobei der vorgegebene Wert auf einen ersten Wert festgelegt wird, wenn die Veränderungsrate des Ist-Werts x der Regelgröße innerhalb vorgegebener Grenzen liegt und auf einen zweiten Wert festgelegt wird, wenn die Veränderungsrate des Ist-Werts x der Regelgröße außerhalb der vorgegebenen Grenzen liegt, und wobei der zweite Wert kleiner ist als der erste Wert. In Schritt 1160 wird der vom Ratenbegrenzer 170 in Schritt 1150 angepasste Wert yRL der Stellgröße ausgegeben.

Glossar

Fluidischer Antrieb

Ein fluidischer Antrieb oder fluidischer Aktuator ist eine Einheit, die ein fluidisches Signal bzw. eine fluidische Signalfolge, z.B. von einem Strom-Druck-Wandler, in mechanische Bewegungen bzw. Veränderungen physikalischer Größen wie Druck oder Temperatur umsetzt. Fluidische Antriebe eignen sich z.B. zum Steuern oder Regulieren eines Prozesses einer verfahrenstechnischen Anlage. Ein fluidischer Antrieb kann entweder mit einer Flüssigkeit oder einem Gas, z.B. hydraulisch und/oder mit Druckluft, betrieben werden.

Führungsgröße

Siehe Regelkreis.

Hysterese

Hysterese bezeichnet das Verhalten eines Systems, bei dem eine Ausgangsgröße bzw. Eigenschaft des Systems nicht allein von einer unabhängig veränderlichen Eingangsgröße des Systems abhängt, mit der die Ausgangsgröße bzw. das System beeinflusst werden kann, sondern auch vom vorhergehenden Zustand der Ausgangsgröße bzw. des Systems. Das System kann also - abhängig von dem Zustand, in dem sich das System befindet, oder den Zuständen, in denen sich das System befunden hat - bei gleicher Eingangsgröße einen von mehreren möglichen Zuständen einnehmen, mit entsprechend unterschiedlichen Werten der Ausgangsgröße. Dieses Verhalten wird auch Pfadabhängigkeit genannt und wird oft mit sogenannten Hystereseschleifen veranschaulicht. Hystereseschleifen entstehen, wenn zwischen zwei Werten der Eingangsgröße hin- und hergeschaltet wird. Sie werden aufgezeichnet, indem beim Hin- und Herschalten die Werte der Ausgangsgröße gegen die Werte der Eingangsgröße aufgetragen werden. Hysterese tritt bei vielen natürlichen und technischen Vorgängen auf, insbesondere bei der Magnetisierung eines Magneten oder in Regelkreisen.

Ist-Wert

Ein Ist-Wert stellt den Wert einer physikalischen Regelgröße zu einem bestimmten Zeitpunkt dar. In vielen Fällen wird der Ist-Wert einer physikalischen Regelgröße mit dem Wert gleichgesetzt, den die physikalische Regelgröße momentan bzw. zum gegenwärtigen Zeitpunkt hat bzw. den ein Sensor oder eine Messapparatur zum Messen der physikalischen Regelgröße momentan bzw. zum gegenwärtigen Zeitpunkt misst. Der bestimmte Zeitpunkt kann sich aber auch auf einen Zeitpunkt sowohl in der Vergangenheit oder Zukunft beziehen. Ein Ist-Wert ist häufig der Ausgangspunkt für eine zielgerichtete Regelung der Regelgröße eines Regelkreises hin zu einem Soll-Wert der Regelgröße.

Rate / Änderungsrate / Veränderungsrate

Eine Rate / Änderungsrate / Veränderungsrate eines Werts einer Größe gibt die Veränderung des Werts der Größe über einen bestimmten Zeitraum im Verhältnis zur Dauer dieses Zeitraums an. Sie ist demnach ein Maß dafür, wie schnell sich der Wert der Größe ändert. Durch den Bezug auf die Zeitdauer enthält die Maßeinheit der Rate / Änderungsrate / Veränderungsrate im Nenner eine Zeiteinheit und im Zähler die Einheit, mit der der Wert der zeitabhängigen Größe angegeben wird. Die Veränderungsrate einer Größe entspricht häufig der ersten zeitlichen Ableitung der Größe.

Regelgröße

Siehe Regelkreis.

Regelkreis

Ein Regelkreis umfasst einen Regler, der mit einer Stellgröße Einfluss auf eine Regelstrecke nimmt, um den Ist-Wert einer Regelgröße der Regelstrecke hin zu einem Soll-Wert zu führen. Hierzu wird der Ist-Wert der Regelgröße in der Regel fortlaufend bzw. regelmäßig bzw. in definierten Zeitintervallen neu bestimmt, d.h. in vorgegebenen oder bestimmten Zeitintervallen gemessen oder mithilfe von Messwerten berechnet. Die Stellgröße bzw. der momentane Wert der Stellgröße wird vom Regler entsprechend angepasst, um den Ist-Wert der Regelgröße hin zu dem Soll-Wert zu führen. Dabei ist die Stellgröße so definiert, dass - zumindest im ausgeregelten Zustand - höhere Ist-Werte der Regelgröße mit höheren Werten der Stellgröße erreicht werden. Der Soll-Wert wird meist von außen vorgegeben.

Regelstrecke

Siehe Regelkreis.

Soll-Wert

Der Soll-Wert stellt einen vorgegebenen bzw. angestrebten Wert einer physikalischen Größe dar, von dem der Ist-Wert der physikalischen Größe im Idealfall so wenig wie möglich abweichen soll. Ein Soll-Wert ist in vielen Fällen das Ziel einer Regelung einer Regelgröße eines Regelkreises. Im Idealfall stimmt zumindest als Ergebnis der Regelung der Ist-Wert der Regelgröße mit dem angestrebten Soll-Wert überein oder weicht davon lediglich im Rahmen der mit der Regelung erreichbaren Genauigkeit bzw. Toleranz ab.

Stellgröße

Siehe Regelkreis.

Bezugszeichen

| | |
|---|---|
| 100 | Regelkreis |
| 110 | Regelstrecke |
| 120 | Vorsteuerung |
| 130 | Einheit zum Bestimmen einer Regelabweichung |
| 140 | Einheit zum Erkennen von Verzögerungen und/oder Hysterese |
| 150 | Regler |
| 160 | Einheit zum Bilden eines gewünschten Werts |
| 170 | Ratenbegrenzer |
| 180 | Einheit zum Bestimmen eines Werts mr |
| 181 | Einheit zum Bestimmen eines Werts pr |
| 190 | Zeitglied |
| w | Soll-Wert einer Regelgröße |
| x | Ist-Wert einer Regelgröße |
| e | Regelabweichung |
| y | gewünschter Wert einer Stellgröße |
| yVST | Kennlinienwert |
| yR | gewünschte Veränderung einer Stellgröße |
| yRL | momentaner Wert der Stellgröße |
| mr | Wert einer minimalen Rate |
| pr | Wert einer maximalen Rate |
| z | Zustandswert |
| zF | Wert eines Zustandsflags |
| 200 | Regelstrecke |
| 210 | Strom-Druck-Wandler |
| 220 | Druckluftleitung |
| 230 | Druckluftkammer eines pneumatischen Antriebs |
| 240 | Druckluftversorgung |
| 250 | Druckmesser |
| I | Stromsignal |
| $\Delta p$ | Ist-Wert einer Druckdifferenz |
| 300 | Strom-Druck-Kennlinie |
| 400 | zeitlicher Verlauf des Ist-Werts x der Regelgröße mit hystereseabhängiger Ratenbegrenzung |
| 410 | zeitlicher Verlauf des Soll-Werts w der Regelgröße |
| 600 | zeitlicher Verlauf des Werts yRL der Stellgröße mit hystereseabhängiger Ratenbegrenzung |
| 700 | zeitlicher Verlauf des gewünschten Wert y der Stellgröße mit hystereseabhängiger Ratenbegrenzung |
| 800 | zeitlicher Verlauf des Zustandswerts z mit hystereseabhängiger Ratenbegrenzung |
| 810 | zeitlicher Verlauf des Zustandsflags zF mit hystereseabhängiger Ratenbegrenzung |
| 900 | zeitlicher Verlauf des Werts pr mit hystereseabhängiger Ratenbegrenzung |
| 1000 | zeitlicher Verlauf des Ist-Werts x der Regelgröße ohne hystereseabhängiger Ratenbegrenzung |
| 1010 | zeitlicher Verlauf des Soll-Werts w der Regelgröße |
| 1100 | Verfahren |
| 1110 | Vorgeben des Soll-Werts w |
| 1120 | Bestimmen des Ist-Werts x und der Veränderung des Ist-Werts x |
| 1130 | Bestimmen der gewünschten Veränderung y |
| 1140 | Übermitteln der gewünschten Veränderung y |

1150 Ändern des Ist-Werts yRL
1160 Ausgabe des Ist-Werts yRL

zitierte Literatur

zitierte Patentliteratur

WO 2008/064740 A1
WO 2015/153105 A1

**Patentansprüche**

1. Verfahren (1100) zum Regeln einer Regelstrecke (110; 200) mit einem fluidischen Antrieb,

1.1 wobei der fluidische Antrieb der Regelstrecke (110; 200) zum Steuern einer Regelgröße geeignet ist;
1.2 wobei die Regelstrecke (110; 200) zum Steuern der Regelgröße mit einer Stellgröße beaufschlagt wird;

wobei das Verfahren folgende Schritte umfasst:

1.3 Vorgeben (1110) eines Soll-Werts (w) für die Regelgröße;
1.4 Bestimmen (1120) eines Ist-Werts (x) und einer Veränderungsrate des Ist-Werts (x) der Regelgröße;
1.5 Bestimmen (1130) einer gewünschten Veränderung (y) eines Werts (yRL) der Stellgröße anhand des vorgegebenen Soll-Werts (w) der Regelgröße und des bestimmten Ist-Werts (x) der Regelgröße;
1.6 Leiten (1140) der gewünschten Veränderung (y) des Werts (yRL) der Stellgröße an einen Ratenbegrenzer (170),
1.6.1 wobei der Ratenbegrenzer (170) aus der gewünschten Veränderung (y) des Werts (yRL) der Stellgröße einen neuen Wert (yRL) der Stellgröße zum Beaufschlagen des fluidischen Antriebs erzeugt (1150, 1160);
1.6.2 wobei der Ratenbegrenzer (170) eine Veränderung des Werts (yRL) der Stellgröße nur mit einer Veränderungsrate zulässt, deren Betrag kleiner als oder gleich einem vorgegebenen Wert (mr, pr) ist;
1.7 wobei der vorgegebene Wert (mr, pr) auf einen ersten Wert festgelegt wird, wenn die Veränderungsrate des Ist-Werts (x) der Regelgröße innerhalb vorgegebener Grenzen liegt;
1.8 wobei der vorgegebene Wert (mr, pr) auf einen zweiten Wert festgelegt wird, wenn die Veränderungsrate des Ist-Werts (x) der Regelgröße außerhalb der vorgegebenen Grenzen liegt;
1.9 wobei der zweite Wert kleiner ist als der erste Wert.

2. Verfahren (1100) nach dem vorhergehenden Anspruch,
**dadurch gekennzeichnet,**

2.1 dass eine Veränderung des vorgegebenen Werts (mr, pr) von dem ersten zum zweiten Wert oder von dem zweiten zum ersten Wert in einem Übergangszeitraum vorgegebener Dauer erfolgt;
2.2 wobei der vorgegebene Wert (mr, pr) während des Übergangszeitraums Werte zwischen dem ersten und dem zweiten Wert annimmt.

3. Verfahren (1100) nach dem unmittelbar vorhergehenden Anspruch,
**dadurch gekennzeichnet,**
**dass** die Werte zwischen dem ersten und dem zweiten Wert aufgetragen gegen die Zeit einem exponentiellen Verlauf folgen.

4. Verfahren (1100) nach einem der vorhergehenden Ansprüche,
**dadurch gekennzeichnet,**

**dass** der vorgegebene Wert (mr, pr) mithilfe einer minimalen negativen und einer maximalen positiven Veränderungsrate vorgegeben wird; wobei die minimale negative und maximale positive Veränderungsrate unterschiedliche Absolutbeträge aufweisen.

5. Verfahren (1100) nach einem der vorhergehenden Ansprüche,
**dadurch gekennzeichnet,**
**dass** die gewünschte Veränderung (y) des Werts (yRL) der Stellgröße anhand des vorgegebenen Soll-Werts (w) der Regelgröße und des bestimmten Ist-Werts (x) der Regelgröße mithilfe eines P-, I-, PI-, PD- oder PID-Gliedes (150) bestimmt wird.

6. Verfahren (1100) nach einem der vorhergehenden Ansprüche,
**dadurch gekennzeichnet,**

6.1 dass zusätzlich die Veränderungsrate des Werts (yRL) der Stellgröße bestimmt wird;
6.2 dass der vorgegebene Wert (mr, pr) auf den ersten Wert festgelegt wird, wenn
6.2.1 die Veränderungsrate des Ist-Werts (x) der Regelgröße außerhalb der vorgegebenen Grenzen liegt und
6.2.2 die Veränderungsrate des Ist-Werts (x) der Regelgröße und die Veränderungsrate des Werts (yRL) der Stellgröße unterschiedliche Vorzeichen haben.

**7.** Verfahren (1100) nach einem der vorhergehenden Ansprüche,
**dadurch gekennzeichnet,**

7.1 dass die Veränderungsrate der Veränderungsrate des Ist-Werts (x) der Regelgröße bestimmt wird;

7.2 dass der vorgegebene Wert (mr, pr) auf den ersten Wert festgelegt wird, wenn die Veränderungsrate des Ist-Werts (x) der Regelgröße und die Veränderungsrate der Veränderungsrate des Ist-Werts (x) der Regelgröße sich innerhalb vorgegebener Grenzen bewegt; und

7.3 dass der vorgegebene Wert (mr, pr) auf den zweiten Wert festgelegt wird, wenn die Veränderungsrate des Ist-Werts (x) der Regelgröße und/oder die Veränderungsrate der Veränderungsrate des Ist-Werts (x) der Regelgröße sich außerhalb der vorgegebenen Grenzen bewegt.

**8.** Stellungsregler mit einem Strom-Druck-Wandler zur Regelung des Drucks eines Fluids in einem fluidischen Antrieb und/oder zur Regelung der Position eines verstellbaren Glieds mithilfe des fluidischen Antriebs und mit

8.1 Mitteln (110, 120, 130, 140, 150, 160, 170, 180, 181, 190; 210), die geeignet sind, die Schritte eines Verfahrens nach einem der vorhergehenden Verfahrensansprüche auszuführen.

**9.** Stellungsregler nach dem unmittelbar vorhergehenden Anspruch,
**gekennzeichnet durch,**
einen Druck-Druck-Wandler, mithilfe dessen der Druck des Fluids in dem Antrieb verstärkt wird.

**10.** Stellventil zur Regelung einer Prozessfluidströmung einer prozesstechnischen Anlage mit einem Stellungsregler nach einem der beiden unmittelbar vorhergehenden Ansprüche.

**11.** Computerprogramm, umfassend Befehle, die bewirken, dass ein Stellungsregler nach Anspruch 8 oder 9 oder ein Stellventil nach Anspruch 10 die Verfahrensschritte nach einem der Ansprüche 1 bis 7 ausführt.

**12.** Computerlesbares Medium, auf dem das Computerprogramm nach dem unmittelbar vorhergehenden Anspruch gespeichert ist.

**Claims**

**1.** A Method (1100) for controlling a controlled system (110; 200) with a fluidic actuator,

1.1 wherein the fluidic actuator of the controlled system (110; 200) is suitable for controlling a controlled variable;

1.2 wherein a manipulated variable is applied to the controlled system (110; 200) to control the controlled variable;

wherein the method comprises the following steps:

1.3 specifying (1110) a setpoint value (w) for the controlled variable;

1.4 determining (1120) an actual value (x) and a rate of change of the actual value (x) of the controlled variable;

1.5 determining (1130) a desired change (y) in a value (yRL) of the manipulated variable on the basis of the predetermined setpoint value (w) of the controlled variable and the determined actual value (x) of the controlled variable;

1.6 directing (1140) the desired change (y) in the value (yRL) of the manipulated variable to a rate limiter (170),

1.6.1 wherein the rate limiter (170) generates (1150, 1160) a new value (yRL) of the manipulated variable from the desired change (y) in the value (yRL) of the manipulated variable for actuating the fluidic actuator;

1.6.2 wherein the rate limiter (170) permits a change in the value (yRL) of the manipulated variable only at a rate of change whose quantity is less than or equal to a predetermined value (mr, pr);

1.7 wherein the predetermined value (mr, pr) is set to a first value if the rate of change of the actual value (x) of the controlled variable is within predetermined limits;

1.8 wherein the predetermined value (mr, pr) is set to a second value if the rate of change of the actual value (x) of the controlled variable is outside the predetermined limits;

1.9 wherein the second value is smaller than the first value.

**2.** A method (1100) according to the preceding claim,
**characterized in that**

2.1 a change in the predetermined value (mr, pr) from the first to the second value or from the second to the first value takes place in a transition period of a predetermined duration;

2.2 wherein the predetermined value (mr, pr) assumes values between the first and the second value during the transition period.

**3.** A method (1100) according to the immediately preceding claim,
**characterized in that**
the values between the first and the second value plotted versus time follow an exponential course.

4. A method (1100) according to any one of the preceding claims,
**characterized in that**

the predetermined value (mr, pr) is predetermined with the aid of a minimum negative and a maximum positive rate of change;
wherein the minimum negative and maximum positive rates of change have different absolute values.

5. A method (1100) according to any one of the preceding claims,
**characterized in that**
the desired change (y) in the value (yRL) of the manipulated variable is determined with the aid of a P, I, PI, PD, or PID element (150) on the basis of the predetermined setpoint value (w) of the controlled variable and the determined actual value (x) of the controlled variable.

6. A method (1100) according to any one of the preceding claims,
**characterized in that**

6.1 the rate of change of the value (yRL) of the manipulated variable is determined additionally;
6.2 the predetermined value (mr, pr) is set to the first value if
6.2.1 the rate of change of the actual value (x) of the controlled variable is outside the specified limits and if
6.2.2 the rate of change of the actual value (x) of the controlled variable and the rate of change of the value (yRL) of the manipulated variable have differing signs.

7. A method (1100) according to any one of the preceding claims,
**characterized in that**

7.1 the rate of change of the rate of change of the actual value (x) of the controlled variable is determined;
7.2 the predetermined value (mr, pr) is set to the first value if the rate of change of the actual value (x) of the controlled variable and the rate of change of the rate of change of the actual value (x) of the controlled variable are within predetermined limits; and
7.3 the predetermined value (mr, pr) is set to the second value if the rate of change of the actual value (x) of the controlled variable and/or the rate of change of the rate of change of the actual value (x) of the controlled variable moves outside the predetermined limits.

8. A positioner having a current-pressure transducer for controlling the pressure of a fluid in a fluidic actuator and/or for controlling the position of an adjustable member by means of the fluidic actuator and having
8.1 means (110, 120, 130, 140, 150, 160, 170, 180, 181, 190; 210) suitable for performing the steps of a method according to any one of the preceding method claims.

9. A positioner according to the immediately preceding claim,
**characterized by,**
a pressure-pressure transducer by means of which the pressure of the fluid in the actuator is amplified.

10. A control valve for controlling a process fluid flow of a process plant having a positioner according to one of the two immediately preceding claims.

11. A computer program comprising instructions which cause a positioner according to claim 8 or 9 or a control valve according to claim 10 to perform the method steps according to any one of claims 1 to 7.

12. A computer-readable medium on which the computer program according to the immediately preceding claim is stored.

**Revendications**

1. Procédé (1100) pour régler une boucle à régler (110 ; 200) avec un entraînement fluidique,

1.1 dans lequel l'entraînement fluidique de la boucle à régler (110 ; 200) est adapté pour commander une variable réglée ;
1.2 dans lequel la boucle à régler (110 ; 200) est alimentée par une variable réglante pour commander la variable réglée ;

dans lequel le procédé comprend les étapes suivantes :

1.3 prédéfinir (1110) une valeur de consigne (w) pour la variable réglée ;
1.4 déterminer (1120) une valeur réelle (x) et un taux de variation de la valeur réelle (x) de la variable réglée ;
1.5 déterminer (1130) une modification souhaitée (y) d'une valeur (yRL) de la variable réglante à l'aide de la valeur de consigne prédéfinie (w) de la variable réglée et de la valeur réelle déterminée (x) de la variable réglée ;
1.6 transmettre (1140) la modification souhaitée (y) de la valeur (yRL) de la variable réglante à un limiteur de débit (170),

1.6.1 dans lequel le limiteur de débit (170) génère une nouvelle valeur (yRL) de la variable réglante pour alimenter l'entraînement fluidique (1150, 1160) à partir de la modification souhaitée (y) de la valeur (yRL) de la variable réglante ;

1.6.2 le limiteur de débit (170) n'autorisant une modification de la valeur (yRL) de la variable réglante qu'avec un taux de variation dont la valeur est inférieure ou égale à une valeur prédéfinie (mr, pr) ;

1.7 la valeur prédéfinie (mr, pr) étant fixée à une première valeur lorsque le taux de variation de la valeur réelle (x) de la variable réglée se situe dans des limites prédéfinies ;

1.8 la valeur prédéfinie (mr, pr) étant fixée à une deuxième valeur lorsque le taux de variation de la valeur réelle (x) de la variable réglée se situe en dehors des limites prédéfinies ;

1.9 dans lequel la deuxième valeur est inférieure à la première valeur.

2. Procédé (1100) selon la revendication précédente, **caractérisé en ce**

2.1 qu'une modification de la valeur prédéfinie (mr, pr) de la première à la deuxième valeur ou de la deuxième à la première valeur se produit dans une période de transition d'une durée prédéfinie ;

2.2 dans lequel la valeur prédéfinie (mr, pr) prend des valeurs entre la première et la deuxième valeur pendant la période de transition.

3. Procédé (1100) selon la revendication immédiatement précédente, **caractérisé en ce** **que** les valeurs entre la première et la deuxième valeur suivent une courbe exponentielle en fonction du temps.

4. Procédé (1100) selon l'une des revendications précédentes, **caractérisé en ce**

**que** la valeur prédéfinie (mr, pr) est prédéfinie à l'aide d'un taux de variation négatif minimal et d'un taux de variation positif maximal ; les taux de variation négatif minimal et positif maximal comprenant des valeurs absolues différentes.

5. Procédé (1100) selon l'une des revendications précédentes, **caractérisé en ce** **que** la variation souhaitée (y) de la valeur (yRL) de la variable réglante est déterminée à l'aide de la valeur de consigne prédéfinie (w) de la variable réglée et de la valeur réelle déterminée (x) de la variable réglée à l'aide d'un élément P, I, PI, PD ou PID (150).

6. Procédé (1100) selon l'une des revendications précédentes, **caractérisé en ce**

6.1 que le taux de variation de la valeur (yRL) de la variable réglante est également déterminé ;

6.2 que la valeur prédéfinie (mr, pr) est fixée à la première valeur si

6.2.1 le taux de variation de la valeur réelle (x) de la variable réglée se situe en dehors des limites prédéfinies et

6.2.2 le taux de variation de la valeur réelle (x) de la variable réglée et le taux de variation de la valeur (yRL) de la variable réglante ont des signes différents.

7. Procédé (1100) selon l'une des revendications précédentes, **caractérisé en ce**

7.1 que le taux de variation du taux de variation de la valeur réelle (x) de la variable réglée est déterminé ;

7.2 que la valeur prédéfinie (mr, pr) est fixée à la première valeur, si le taux de variation de la valeur réelle (x) de la variable réglée et le taux de variation du taux de variation de la valeur réelle (x) de la variable réglée se situent dans des limites prédéfinies ; et

7.3 que la valeur prédéfinie (mr, pr) est fixée à la deuxième valeur si le taux de variation de la valeur réelle (x) de la variable réglée et/ou le taux de variation du taux de variation de la valeur réelle (x) de la variable réglée se situent en dehors des limites prédéfinies.

8. Régulateur de position avec un convertisseur courant-pression pour régler la pression d'un fluide dans un entraînement fluidique et/ou pour régler la position d'un élément réglable à l'aide de l'entraînement fluidique et avec

8.1 des moyens (110, 120, 130, 140, 150, 160, 170, 180, 181, 190 ; 210) qui sont aptes à exécuter les étapes d'un procédé selon l'une des revendications de procédé précédentes.

9. Régulateur de position selon la revendication immédiatement précédente , **caractérisé par** un convertisseur pression-pression, à l'aide duquel la pression du fluide dans l'entraînement est amplifiée.

10. Soupape de positionnement pour régler un flux de fluide de processus d'une installation de technologie des processus avec un régulateur de position selon l'une des deux revendications immédiatement précédentes.

11. Programme informatique comprenant des instructions qui font qu'un régulateur de position selon la revendication 8 ou 9 ou une soupape de positionnement selon la revendication 10 exécute les étapes du procédé selon l'une des revendications 1 à 7.

12. Support lisible par ordinateur sur lequel est enregistré le programme informatique selon la revendication immédiatement précédente.

Fig. 1

Fig. 2

Fig. 3

Fig. 4

Fig. 5

Fig. 6

Fig. 7

Fig. 8

Fig. 9

Fig. 10

Stand der Technik

1100

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008064740 A1
- WO 2015153105 A1